# EUROPÄISCHE PATENTSCHRIFT

(11) **EP 3 584 764 B1**
(45) Veröffentlichungstag und Bekanntmachung des Hinweises auf die Patenterteilung: **28.07.2021**
(21) Anmeldenummer: 19171375.9
(22) Anmeldetag: 26.04.2019
(51) Int. Cl.: G06T 7/73

(54) **VERFAHREN ZUR ANSTEUERUNG EINER MASCHINE MITTELS MINDESTENS EINER RAUMKOORDINATE ALS ANSTEUERGRÖSSE**
METHOD FOR CONTROLLING A MACHINE BY MEANS OF AT LEAST ONE SPATIAL COORDINATE AS CONTROL VARIABLE
PROCÉDÉ DE COMMANDE D'UNE MACHINE AU MOYEN D'AU MOINS UNE COORDONNÉE SPATIALE EN TANT QUE GRANDEUR DE COMMANDE

(30) Priorität: 30.04.2018 DE 102018206675
(43) Veröffentlichungstag der Anmeldung: 25.12.2019
(73) Patentinhaber: Deutsche Bahn AG, 10785 Berlin (DE)
(72) Erfinder: Rode, Oliver, 60598 Frankfurt am Main (DE)

(56) Entgegenhaltungen:
- EP-A1- 3 153 940
- H. KATO ET AL: "Marker tracking and HMD calibration for a video-based augmented reality conferencing system", AUGMENTED REALITY, 1999. (IWAR '99). PROCEEDINGS. 2ND IEEE AND ACM INT ERNATIONAL WORKSHOP ON SAN FRANCISCO, CA, USA 20-21 OCT. 1999, 1. Januar 1999 (1999-01-01), Seiten 85-94, XP055370372, US DOI: 10.1109/IWAR.1999.803809 ISBN: 978-0-7695-0359-2
- GOMEZ STEVEN R ET AL: "A Fiducial-Based Tangible User Interface for White Matter Tractography", 1. Dezember 2010 (2010-12-01), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 373 - 381, XP047441653, ISBN: 978-3-642-17318-9 * Zusammenfassung * * Abschnitte 2.2, 3.1, 3.3; Abbildungen 1,4 *
- JIN SHAOGANG ET AL: "On-board vision autonomous landing techniques for quadrotor: A survey", 2016 35TH CHINESE CONTROL CONFERENCE (CCC), TCCT, 27. Juli 2016 (2016-07-27), Seiten 10284-10289, XP032953035, DOI: 10.1109/CHICC.2016.7554984
- ARTUR SAGITOV ET AL: "ARTag, AprilTag and CALTag Fiducial Marker Systems: Comparison in a Presence of Partial Marker Occlusion and Rotation :", PROCEEDINGS OF THE 14TH INTERNATIONAL CONFERENCE ON INFORMATICS IN CONTROL, AUTOMATION AND ROBOTICS, 1. Januar 2017 (2017-01-01), Seiten 182-191, XP055590736, DOI: 10.5220/0006478901820191 ISBN: 978-989-7582-64-6

## Beschreibung

Die Erfindung betrifft ein Verfahren zur Erzeugung mindestens einer Raumkoordinate als Ansteuergröße zur Ansteuerung einer Maschine mittels eines auf einer Trägerebene eines Trägermediums aufgebrachten zweidimensionalen Codes, welche zur Ansteuerung eines durch die Raumkoordinate beschriebenen Zielpunktes eingerichtet ist, wobei der auf einer Trägerebene eines Trägermediums aufgebrachte zweidimensionale Code in einem ersten Verfahrensschritt mittels eines optischen Bildverarbeitungssystems gelesen wird.

Die Ansteuerung von Maschinen mittels Raumkoordinaten ist aus dem Stand der Technik bekannt. Allerdings müssen die Raumkoordinaten stets in einem absoluten oder relativen Bezugssystem angegeben werden, damit sowohl die angesteuerte Maschine als auch die ansteuernde Instanz bei der Umsetzung von auf diesen Raumkoordinaten basierenden Ansteuerbefehlen ein zueinander synchronisiertes und gleichlautendes Verständnis von deren Bedeutungsinhalt aufweisen. Üblicherweise werden deshalb die Raumkoordinaten in einem absoluten Koordinatensystem angegeben, welches sowohl im Ansteuerungssystem der angesteuerten Maschine als auch in der ansteuernden Instanz hinterlegt ist. Auf diese Weise kann ein Ansteuerungsbefehl beispielsweise durch Übertragung ortsfester Geo-Koordinaten übermittelt werden, wie z.B. Raumkoordinaten, die im ortsfesten geodätisches Referenzsystem WGS 84 angegeben sind.

Nachteilig hieran ist, dass sämtliche für die Ansteuerung einer Maschine relevanten Raumpunkte in die Koordinaten eines solchen geodätischen Referenzsystems umgerechnet werden müssen, bevor eine hierauf basierende maschinentechnische Ansteuerung überhaupt erst möglich ist. Dies ist in vielen Fällen sehr aufwändig und schränkt die Nutzbarkeit für spontane bzw. intuitive Anwendungszwecke, bei denen Raumkoordinaten nicht in exakt vorhersehbarer Weise ermittelbar sind, stark ein.

Deshalb kommen in solchen Anwendungsfällen meist relative Bezugssysteme zur Anwendung. Eine sehr einfache Realisierungsvariante dieses Ansatzes ist beispielsweise in herkömmlichen Fernsteuerungen verkörpert, welche in aller Regel darauf basieren, dass der Auslenkungsgrad eines Ansteuerungshebels oder "Joysticks" aus einer neutralen Grundposition sensorisch erfasst und in hierzu korrespondierende relative Ansteuerungsgrößen übersetzt bzw. umgewandelt wird. Diese relativen Ansteuerungsgrößen werden in der angesteuerten Maschine in Bewegungsbefehle rückübersetzt. Die Synchronisation zwischen dem Auslenkungsgrad des Ansteuerungshebels und der bewirkten Bewegung der angesteuerten Maschine obliegt dem Bediener der Ansteuerung. Auf diese Weise wird beispielsweise bei einem mittels Joystick gesteuertem Computerspiel die Bewegungsrichtung und / oder -schnelligkeit eines computeranimierten Objekts beeinflusst bzw. gesteuert. Nachteilig hierbei ist aber, dass die ansteuernde Instanz (hier in Form einer Fernbedienung) Sensoren bzw. Einrichtungen zur Erfassung des Auslenkungsgrades des Ansteuerungshebels sowie Einrichtungen zur Übertragung der hieraus ermittelten Ansteuerungsgrößen an die anzusteuernde Maschine benötigt. Dies resultiert in einer gerätetechnisch relativ aufwändigen und sperrigen Hardware, die in Bezug auf den jeweiligen Anwendungszweck und die anzusteuernde Vorrichtung spezifisch angepasst ist.

KATO et al. ("Marker tracking and HMD calibration for a video-based augmented reality conferencing system", 1999, DOI: 10.1109/IWAR. 1999.803809) beschreibt ein Video-basiertes Konferenzsystem, bei dem eine Mehrzahl von Passermarken (englisch: "fiducial markers"), deren codierter Inhalt jeweils einen bestimmten Teilnehmer der Konferenz definiert, mittels eines Bildverarbeitungssystems derart erfasst werden, dass virtuelle Bilder der Teilnehmer, die sich in Realität an einem anderen Ort befinden und live abgefilmt werden, den jeweiligen Passermarken überlagert werden. Größe und Orientierung der überlagerten Bilder sind durch Manipulieren von Lage und Orientierung der Passermarken in Bezug auf das Bildverarbeitungssystem veränderbar.

GOMEZ et al. ("A fiducial-based tangible user interface for white matter tractography", 2010, ISBN: 978-3-642-1718-9) offfenbart ein Verfahren, bei der eine Passermarke vor einer Kamera mittels einer kreisenden Bewegung geführt und hierbei durch Mitteln der von der Kamera erfassten Einzelpositionen der Schwerpunkt der Passermarke rechnerisch ermittelt wird.

SHAOGANG et al. ("On-board vision autonomous landing techniques for quadrotor: A survey", 2016, DOI: 10.1109/CHICC.2016.7554984) behandelt ein Bildverarbeitungssystem, bei dem mittels einer Kamera das Bild einer solchen Passermarke erstellt und deren Koordinaten im Kamera-Koordinatensystem ermittelt werden. Diese Koordinaten werden als Zielvorgabe für einen Quadrotor verwendet, so dass dieser zur Passermarke hin bewegt werden kann, jedoch zu keinem anderen Zielort.

Der Erfindung liegt daher die Aufgabe zugrunde, ein Verfahren zur Erzeugung mindestens einer Raumkoordinate als Ansteuergröße zur Ansteuerung einer Maschine mittels eines auf einer Trägerebene eines Trägermediums aufgebrachten zweidimensionalen Codes, welche zur Ansteuerung eines durch die Raumkoordinate beschriebenen Zielpunktes eingerichtet ist, bereitzustellen, welche diese Nachteile des Standes der Technik überwindet. Die Ansteuerung von Maschinen mittels Raumkoordinaten soll vereinfacht und insbesondere auf intuitive Weise ermöglicht werden. Insbesondere soll die Möglichkeit geschaffen werden, Maschinen anzusteuern, ohne dabei auf sperrige Ansteuerungsvorrichtungen, Fernbedienungen oder ähnliches angewiesen zu sein.

Unter einer "Maschine" in diesem Sinne ist jegliche Art von Einrichtung zu verstehen, die geeignet ist, Funktionen in Abhängigkeit von einer Ansteuerung mittels Raumkoordinaten auszuführen. Dies beschränkt sich keinesfalls nur auf physisch greifbare Geräte oder Vorrichtungen, sondern umfasst insbesondere auch computerbasierte bzw. Software-gesteuerte Applikationen, deren Funktionalität auf einer Ansteuerbarkeit durch Raumkoordinaten beruht, und die auf einem mit einem Bildverarbeitungssystem verbundenen Rechner bzw. Computer geladen bzw. lauffähig sind. Unter "Raumkoordinaten" sind in diesem Zusammenhang jegliche Art von Daten zur Bezeichnung einer absoluten oder relativen räumlichen Position zu verstehen.

Erfindungsgemäß wird diese Aufgabe in verfahrensorientierter Weise in Verbindung mit dem Oberbegriff des Patentanspruches 1 dadurch gelöst, dass das Verfahren weiters folgende Verfahrensschritte aufweist:
▪ Ermitteln der räumlichen Lage eines senkrecht auf dem Flächenschwerpunkt des Codes stehenden Normalenvektors mittels des Bildverarbeitungssystems,
▪ Erfassen des Drehwinkels einer Rotationsbewegung der Trägerebene des Codes um eine zur Trägerebene senkrechte Drehachse mittels des Bildverarbeitungssystems,
▪ Bestimmen der Länge des Normalenvektors basierend auf dem Drehwinkel,
▪ Ermitteln einer vektoriellen Raumkoordinate aus der räumlichen Lage des Normalenvektors und der Länge des Normalenvektors sowie Übermitteln der vektoriellen Raumkoordinate als Ansteuergröße an ein Ansteuerungssystem der Maschine.

Auf diese Weise kann die Ansteuerung einer Maschine mittels eines einfachen, im Wesentlichen zweidimensionalen Trägermediums erfolgen, auf welchem ein maschinenlesbarer zweidimensionaler Code aufgebracht ist, und mittels dem durch eine einfache Handgeste, welche eine Drehbewegung des Trägermediums bzw. des darauf aufgebrachten Codes bewirkt, Informationen über Raumkoordinaten erzeugbar sind. Diese werden dann zur Ansteuerung der Maschine genutzt. Es handelt sich bei diesen Raumkoordinaten um den Zielpunkt bzw. die Spitze eines Vektors, dessen räumliche Lage durch den im ersten Verfahrensschritt ermittelten Normalenvektor im Flächenschwerpunkt der vom Code eingenommenen Fläche und dessen Länge durch den absoluten Betrag des erfindungsgemäß im zweiten Verfahrensschritts erfassten Drehwinkels bestimmt ist. Als Drehwinkel wird hierbei jeweils die Abweichung in Bezug auf eine erste, während der Anwendung des erfindungsgemäßen Verfahrens erkannte Ausgangslage bestimmt. Das Trägermedium kann beispielsweise in einer ersten Ausführungsvariante als ein flaches Kärtchen aus Kunststoff oder Papier bzw. Karton ausgeführt sein, wobei sich dessen Abmessungen ausschließlich durch die zur optischen Auflösung und Erkennbarkeit des Codes durch das Bildverarbeitungssystem notwendigen Größenverhältnisse bestimmen. In einer zweiten Ausführungsvariante kann das Trägermedium als Display, beispielsweise eines herkömmlichen Smartphones oder Tablet-Computers, ausgeführt sein. Mit Blick auf das optische Auflösungsvermögen aktuell im Stand der Technik verfügbarer Kameras kann das Trägermedium also sehr klein ausgeführt sein, so dass es problemlos jederzeit von einem menschlichen Anwender des erfindungsgemäßen Verfahrens mitgeführt und zur Anwendung gebracht werden kann. Durch translatorisches Verschieben des Trägermediums innerhalb der durch das Trägermedium bzw. durch den hierauf aufgebrachten Code aufgespannten Ebene kann im Zuge des ersten erfinderischen Verfahrensschrittes die Position des Flächenschwerpunkts des Codes und damit der Anfangspunkt des Normalenvektors verschoben werden. Durch anschließendes Verdrehen um eine zur Trägerebene senkrechte Drehachse wird sodann im Zuge des zweiten erfinderischen Verfahrensschrittes die Länge des Vektors und damit auch dessen Zielpunkt ermittelt. Das erfindungsgemäße Verfahren ermöglicht somit die Bestimmung einer Raumkoordinate und - sobald die erfasste Raumkoordinate mittels eines separaten, hier nicht näher beschriebenen Verfahrensschrittes fixiert bzw. "eingefroren" ist - eine hierauf basierende Ansteuerung einer Maschine mittels einer einfachen und in intuitiver Weise von jedermann leicht und mit nur einer Hand durchzuführenden Geste. Unter einer "Geste" ist in diesem Zusammenhang jegliche Art von Handbewegung zu verstehen, mittels der das Trägermedium als solches relativ zu seiner Umgebung bewegt wird. Zudem ermöglich ein solches Verfahren in besonders einfacher Weise eine Internet-basierte Vernetzung physischer und virtueller Objekte im sog. "Internet of Things" (loT).

Im Zuge des ersten Verfahrensschritts wird der im Flächenschwerpunkt des Codes senkrecht stehende Normaleneinheitsvektor ermittelt sowie im zweiten Verfahrensschritt mittels des erfassten Drehwinkels ein Skalar für die Länge des Vektors ermittelt, woraus sich die Raumkoordinate als Zielpunkt durch vektorielle Addition von Anfangspunkt bzw. Flächenschwerpunkt des Code und skaliertem Normalenvektor ergibt.

In bevorzugter Weise kann das erfindungsgemäße Verfahren vorsehen, dass eine Erfassung des Drehwinkels bzw. der Rotationsbewegung der Trägerebene im Zuge des zweiten Verfahrensschrittes erst bei Überschreiten eines unteren Grenzwertes durchgeführt wird. Auf diese Weise wird die Bedienfreundlichkeit und Gebrauchstauglichkeit des erfindungsgemäßen Verfahrens verbessert, da das Verfahren nicht schon bei kleinsten, vom Benutzer ungewollten Gesten-Bewegungen zur Ausführung kommt.

Ferner kann eine Skalierbarkeit der proportionalen Längenänderung des Vektors in Abhängigkeit von der ermittelten absoluten Rotations-Auslenkung der Trägerebene vorgesehen sein. Auf diese Weise wird eine intuitiv vom Anwender ebenfalls leicht erfassbare und umsetzbare Grob- und Feinansteuerung des Zielpunktes des Vektors (bzw. der Raumkoordinate) realisiert.

Die mittels des erfindungsgemäßen Verfahrens durchgeführten Ansteuerungsvorgänge können nicht nur die physische Navigation der angesteuerten Maschine zu einem durch die Raumkoordinate bestimmten Raumpunkt in einem realen Raum umfassen, sondern auch bspw. in einem virtuellen Raum die Ermittlung eines Systemzustands an einem durch die Raumkoordinate definierten Raumpunkt. Somit können beispielsweise folgende Funktionen einer erfindungsgemäß angesteuerten Maschine realisiert werden:
▪ Die Maschine ist als Fahrzeug (Fluggerät etc...) ausgeführt und wird durch das erfindungsgemäße Ansteuerungsverfahren zu einer Raumkoordinate hin bewegt.
▪ Die Maschine ist dazu eingerichtet, um die erfindungsgemäß ermittelte Raumkoordinate an ein anderes technisches System (wie z.B. eine Reparaturdatenbank) weiterzuleiten.
▪ Die Maschine ist dazu eingerichtet, um anhand der erfindungsgemäß ermittelten Raumkoordinate Objekte (wie z.B. Bauteile eines komplexeren Gebildes) in einem virtuellen Raum zu identifizieren.

Gemäß einer sinnvollen Weiterentwicklung der erfinderischen Grundidee wird beim Erfassen des Drehwinkels mittels des Bildverarbeitungssystems zusätzlich die Drehrichtung der Rotationsbewegung der Trägerebene des Codes erfasst und hieraus die Orientierungsrichtung des Normalenvektors in Bezug auf die Trägerebene ermittelt. Auf diese Weise ist der Skalar des Normalenvektors mittels derselben Gestenbewegung invertierbar und es sind durch unterschiedlich orientierte Drehbewegungen Raumpunkte adressierbar, die sich in durch eine virtuelle Ebene (repräsentiert durch die Trägerebene des Codes) getrennten Halbräumen befinden. Es ist in diesem Zusammenhang lediglich zu beachten, dass der Code nicht in Form eines rotationssymmetrischen optischen Musters ausgeführt sein darf.

Eine hierzu alternative Ausgestaltung der Erfindung sieht vor, dass in einem weiteren Verfahrensschritt mittels des Bildverarbeitungssystems eine Rotation der Trägerebene des Codes um eine zur Trägerebene parallele Drehachse erfasst und als Eingangssignal für eine Invertierung der Orientierungsrichtung des Normalenvektors in Bezug auf die Trägerebene herangezogen wird. Auf diese Weise ist der Skalar des Normalenvektors mittels einer von der im zweiten Verfahrensschritt vorgesehenen ersten Gestenbewegung (= Rotation der Trägerebene um eine zur Trägerebene senkrechte Drehachse) eindeutig unterscheidbaren zweiten Gestenbewegung invertierbar, sobald die mittels dieser zweiten Gestenbewegung erzielte Auslenkung der Trägerebene aus ihrer Ausgangsposition einen unteren Schwellwert überschreitet. Eine solche zweite Gestenbewegung könnte beispielsweise in Form eines vollständigen Umdrehens (bzw. Wendens) des Trägermediums (bzw. der Trägerebene) des Codes um eine solche zur Trägerebene parallele Drehachse festgelegt sein, so dass eine Kamera des Bildverarbeitungssystems im Anschluss an diese zweite Gestenbewegung auf eine Rückseite des Trägermediums bzw. der Trägerebene gerichtet ist. Auf dieser Rückseite ist ein weiterer Code aufgebracht, dessen Aufbau demjenigen auf der Vorderseite des Trägermediums entspricht, so dass das erfindungsgemäße Verfahren durch Rückkehr zum zweiten Verfahrensschritt und des erneutes Durchlaufen weitergeführt werden kann. Alternativ könnte die zweite Gestenbewegung auch in Form eines schnellen, kurzzeitigen Verkippens der Trägerebene um eine solche zur Trägerebene parallele Drehachse (und anschließende Rückkehr in die Ausgangsstellung) ausgeführt sein, so dass ein rückseitig auf dem Trägermedium bzw. der Trägerebene aufgebrachter zweiter Code entbehrlich ist.

Eine weitere hierzu alternative Ausgestaltung der Erfindung sieht vor, dass die Orientierungsrichtung des Normalenvektors in Bezug auf die Trägerebene in einem weiteren Verfahrensschritt durch Auslesen und Entschlüsseln des Codes ermittelt wird. Die Richtungs-Information des Normalenvektors ist somit Bestandteil des im Code codierten Inhalts. Im Zuge der praktischen Anwendung des erfindungsgemäßen Verfahrens kann gemäß einer sinnvollen Ausgestaltungsvariante vorgesehen sein, dass das Trägermedium beidseitig voneinander diesbezüglich abweichende Codes aufweist, so dass ein Wechsel bzw. eine Umkehrung der Richtungsinformation durch Wenden des Trägermediums und anschließende Auslesen des Codes auf der danach jeweils nach oben, d.h. in Richtung auf eine Kamera des Bildverarbeitungssystems hin orientierten Trägerebene ermöglicht wird.

Gemäß einer Weiterentwicklung des erfinderischen Grundkonzepts weist das Ermitteln der räumlichen Lage des Normalenvektors folgende Verfahrensschritte auf:
▪ Empfang von Bilddaten von mindestens einer Kamera des optischen Bildverarbeitungssystems,
▪ Auswerten der Bilddaten auf das Vorhandensein von Farbmarken,
▪ Gruppierung von erkannten Farbmarken zu Farbmarkengruppen,
▪ Ermittlung der zweidimensionalen Koordinaten aller zu einer Farbmarkengruppe zugehörigen Farbmarken in einem der Kamera zugeordneten Koordinatensystem,
▪ Transformation der zweidimensionalen Koordinaten aller Farbmarken einer Farbmarkengruppe in ein der Maschine zugeordnetes dreidimensionales Koordinatensystem,
▪ Ermittlung des Normalenvektors durch den Schwerpunkt der von den Farbmarken einer Farbmarkengruppe aufgespannten Fläche.

Zahlreiche aus dem Stand der Technik bekannte optoelektronisch verarbeitbare Codes weisen nach standardisierten Vorgaben aufgebaute Orientierungsmarken auf, welche zur korrekten zweidimensionalen Ausrichtung eines von einem solchen Code aufgenommenen Kamerabildes dienen. Durch diese Standards sind u.a. auch die Proportionen dieser Orientierungsmarken in Bezug auf Größe, Ausrichtung und relativen Abstand zueinander festgelegt. Die Erfindung schlägt nun zur Erweiterung der erfindungsgemäßen Grundidee vor, derartige maschinenlesbare Codes mit Farbmarken zu versehen, die an definierten Stellen des Codes angeordnet sind sowie definierte Proportionen in Bezug auf den Code und definierte Farben aufweisen. Hierbei ist für jeden Code eine Mehrzahl von Farbmarken in jeweils unterschiedlichen definierten Farben vorgesehen. Als besonders vorteilhaft hat sich dabei ein 3-Tupel von unterschiedlichen Farben herausgestellt. Die einzelnen Farbmarken eines Codes können in Orientierungsmarken integriert sein oder in sonstiger Weise in einer definierten geometrischen Beziehung zu Orientierungsmarken stehen. Alternativ hierzu ist aber auch eine von eventuellen Orientierungsmarken unabhängige Positionierung der Farbmarken innerhalb des Codes denkbar.

Gemäß dem erfinderischen Verfahren werden im Zuge des ersten Verfahrensschrittes die von der Kamera des Bildverarbeitungssystems empfangenen Bilddaten fortlaufend auf das Vorliegen von Farbmarken ausgewertet. Erkannte Farbmarken werden anhand der ermittelten Farbe und der Code-spezifisch definierten Proportionen zu Farbmarkengruppen gruppiert, wobei jede Farbmarkengruppe einem n-Tupel von vordefinierten Farben entspricht. Gemäß der Erfindung sind also die Farbmarken eines jeden Codes mit jeweils einer unterschiedlichen Schlüsselfarbe markiert. Auf diese Weise ist eine wirksame Vorselektion der empfangenen Kamerabild-Daten möglich und es können zusätzliche Informationen über die logische und geometrische Zugehörigkeit sensorisch erkannter Farbmarken zu einzelnen Codes generiert werden. Als Farbmarke ist dabei eine punktförmige Ausdehnung gleichen Farbtons zu verstehen, die sich über mehrere Pixel erstrecken kann und von anderen Bildpunkten unterschieden werden kann. So müssen beispielsweise als gleichfarbig erkannte Farbmarken zu unterschiedlichen Codes gehören, während als verschiedenfarbig erkannte Farbmarken Bestandteile desselben Codes sein können, sofern ihre Abstände zueinander in Abhängigkeit zu ihren Proportionen ein definiertes Maß nicht überschreiten.

Im nächsten Teilschritt werden die zweidimensionalen Koordinaten aller zu einer gemeinsamen Farbmarkengruppe gehörigen Farbmarken ermittelt, wobei ein auf die Kamera bezogenes erstes Koordinatensystem als Bezugssystem dient, und in einem weiteren Teilschritt in ein zweites absolutes Koordinatensystem transformiert, welches dem ersten, auf die Kamera bezogenen Koordinatensystem übergeordnet ist. Hierzu wird die dreidimensionale Geometrie der durch die Farbmarkengruppe aufgespannten Ebene durch eine an sich bekannte Zentralprojektion aus den bekannten Positionen, Abmessungen und Orientierungen der Farbmarken im unverzerrten Code rekonstruiert und deren Ebenen-Gleichungen ermittelt. Aus dem Kreuzprodukt zweier diese Ebene aufspannender Vektoren wird in einem letzten Teilschritt zunächst der Normalenvektor und schließlich zusammen mit dem Flächenschwerpunkt die Flächennormale dieser Ebene ermittelt. Auf diese Weise ermöglicht das erfindungsgemäße Verfahren eine Ermittlung der dreidimensionalen Koordinaten sowie der Normale dieser Ebene. Bei einem in vorteilhafter Weise standardisierten Code sind die verschiedenen Farbmarken des Codes derart positioniert, dass die Flächennormale der von einer Farbmarkengruppe aufgespannten Ebene mit der Flächennormale der Trägerebene des Codes übereinstimmt.

Es ist in diesem Zusammenhang besonders vorteilhaft, wenn zur Auswertung der Bilddaten mindestens eine Bitmaske erstellt wird, welche auf in den Farbmarken enthaltene Schlüsselfarben abgestimmt ist. Die Verwendung von Schlüsselfarben dient zum optischen Freistellen der Farbmarken gegenüber dem Hintergrund und den restlichen Teiles des Codes. Die Kamera und das Freistellungverfahren müssen daher durch Messreihen kalibriert werden; so muss bei der Kamera ein Weißabgleich durchgeführt werden und die Schwellwerte für eine Freistellung auf die im Testbild gemessenen Farbtöne, inklusive einer Toleranz von ca. plus/minus 2-3% eingestellt werden. Umgebungsabhängig muss auch im laufenden Betrieb ein Weißabgleich zur Lichtfarbe erfolgen, z.B. zur Korrektur des zeitabhängigen Sonnenfarbe oder der Deckenbeleuchtung, da die von der Kamera erfasste Farbe durch subtraktive Farbmischung der Farbmarken mit der Beleuchtung entsteht. Zudem muss das Freistellungverfahren zur Verringerung von Messfehlern Bildteile mit einer geringen Farbsättigung oder Helligkeit (unter 15-25%) freistellen. Die Einstellung der Toleranz und Schwellwerte darf nicht zu gering sein, da die Farben nicht zwangsläufig direkt gemessen werden, sondern bei geringer Auflösung durch additive Farbmischung der Abbildung innerhalb den einzelnen von der Kamera aufgenommenen Pixeln auch Mischtöne mit den weißen und schwarzen Bildelementen in der unmittelbaren Umgebung der Farbmarke im Code entstehen. Andererseits darf aber auch die Einstellung der Toleranz- und Schwellwerte nicht zu hoch ausfallen, um die Bildelementen mit der notwendigen Schärfe identifizieren zu können.

Es ist in diesem Zusammenhang vorteilhaft, wenn eine oder jede Farbmarke lichtemittierend, zum Beispiel als Lichtquelle, ausgelegt ist. So entfallen die oben genannten Probleme mit der subtraktiven Farbmischung. Zudem lässt sich additive Farbmischung bei intensiven Lichtquellen zugunsten der Farberkennung beeinflussen, da die Gewichtung eine Rolle spielt. Zudem wird der Einsatz des erfindungsgemäßen Verfahrens unter schlechten Sichtbedingungen, z.B. bei Nacht, verbessert.

Eine mögliche Ausgestaltung des Erfindungskonzeptes sieht vor, dass der Code als zweidimensionaler QR-Code ausgeführt ist. Derartige QR-Codes sind weit verbreitet und sind wegen ihren standardisierten Eigenschaften in bestehenden Systemen nutzbar. Insbesondere können die Farbmarken in die Orientierungsmarken des QR-Codes integriert werden. Für die Anwendung des erfindungsgemäßen Verfahrens eignet sich in besonders vorteilhafter Weise ein QR-Code, dessen Farbmarken jeweils einen 3 x 3 Elemente großen, inneren Teil einer Orientierungsmarke des QR-Codes bilden, wobei jede Farbmarke in einer zu den übrigen Farbmarken desselben QR-Codes unterscheidbaren Schlüsselfarbe mit jeweils voller Farbsättigung eingefärbt ist. Zudem ist die Anordnung der unterschiedlich gefärbten Farbmarken zueinander innerhalb eines jeden QR-Codes identisch. Die übrigen Bestandteile des QR-Codes außerhalb der Farbmarke umfassen idealerweise nur schwarz oder weiß gefärbte Elemente. Die Abmessung des QR-Codes soll möglichst wenig Elemente umfassen, und idealerweise auf 21x21 Elemente begrenzt sein. Auf diese Weise sind die Abmessungen der Orientierungsmarken im Verhältnis zum Code maximal. Um den QR-Code herum sollte eine Fläche frei von Farben (außer Grautönen) bleiben, um in Fällen von optischen Überlagerungen oder bei einer Verwendung der Schlüsselfarben außerhalb des QR-Codes die Ermittlung der Farbgruppen oder Flächennormalen zu verbessern. Es hat sich als sinnvoll herausgestellt, wenn die Breite dieser Freifläche mindestens sieben Elementen entspricht.

Zur Kodierung weiterer Zusatzinformationen in einem solchen QR-Code sind zwei Alternativen denkbar.

Gemäß einer ersten Ausführungsvariante ist ein QR-Code horizontal und vertikal in möglichst gleich große Segmente unterteilt, wobei die Farbmarken in jeweils einem dieser Segmente angeordnet sind. Mittels weiterer Schlüsselfarben, die von den Schlüsselfarben der Farbmarken abweichen, sind Zusatzinformationen in den übrigen Segmenten, die keine Farbmarken aufweisen, codierbar.

Hierzu alternativ ist die Anbringung eines zusätzlichen Codes an einer exakt definierten Position neben oder im räumlichen Umfeld außerhalb des QR-Codes denkbar, wobei dessen Elemente so dimensioniert sind, dass dieser zusätzliche Code aus großer Entfernung lesbar ist.

In beiden Alternativen ist das Bild vor der Auswertung des zusätzlichen Farbcodes anhand der mittels des erfindungsgemäßen Verfahrens ermittelten Ebenen-Gleichungen zu transformieren, so dass ein zeilenorientierter Scan des Farbmusters möglich ist. Hierzu wird die Position eines jeden Segmentes durch Interpolation der Koordinaten der erkannten Farbmarken ermittelt sowie die Färbung jedes Segments bestimmt und auf Übereinstimmung mit einer Schlüsselfarbe überprüft. Da sich der Messbereich eines jeden Segments über mehrere Pixel bzw. Elemente erstrecken kann, wird die Färbung des Segmentes durch Berechnung des Mittelwertes bestimmt.

Eine Ausgestaltungsvariante der Erfindung sieht vor, dass der Code als eine zweidimensionale Anordnung mindestens zweier Farbmarken ausgeführt ist, wobei jede Farbmarke zur Anzeige mindestens zweier für die jeweilige Farbmarke individueller Farbzustände eingerichtet ist, und eine dieser Farbmarken zusätzlich dazu eingerichtet ist, mit der Trägerfrequenz zwischen einem ersten und einem zweiten Farbzustand zu wechseln. Als Farbmarke ist dabei eine punktförmige Ausdehnung gleichen Farbtons zu verstehen, die sich über mehrere Pixel erstrecken kann und von anderen Bildpunkten unterscheidbar ist. Eine erste Farbmarke dient als stetig zwischen zwei Farbzuständen wechselndes Trägersignal. Die mindestens eine weitere Farbmarke derselben Anordnung von Farbmarken dient zur Übertragung der Datenwerte (also der zu übertragenden "Nutzdaten"). Sobald auf der Empfängerseite eine Zustandsänderung für die dem Trägersignal zugeordnete Farbmarke erkannt wird, muss auch für die mindestens eine weitere Farbmarke jeweils eine Zustandsänderung in Form eines vom vorherigen Zustand kᵢ abweichenden Farbzustands detektiert werden. Andernfalls liegt ein fehlerbehaftetes Bild vor. Auf Empfängerseite werden alle Bilder verworfen, bei denen nicht mindestens zwei aufeinanderfolgende Bildaufnahmen den gleichen Zustand darstellen. Ansonsten erkennt die Empfangsvorrichtung auf das Vorliegen eines fehlerbehafteten Zwischenbildes und verwirft dieses. In bevorzugter Weise ist für die Farbmarke des Trägersignals ein farbloser Helligkeitswechsel zwischen "schwarz" und "grau" vorgesehen. Für die Farbmarken der Datenwerte ist vorteilhafterweise die Verwendung von gesättigten Farben (Farbwinkeln) vorgesehen. Die Farbtöne sollen erfindungsgemäß so gewählt, dass die Farbzustände der Farbmarken annähernd gleich hell dargestellt werden, um Blendeffekte in der Empfangsvorrichtung zu vermeiden.

In besonders vorteilhafter Weise ist vorgesehen, dass die zu übertragenden Daten als eine zweidimensionale Anordnung mindestens dreier Farbmarken codiert werden. Auf diese Weise ist es möglich, mittels einer entsprechend eingerichteten Empfangsvorrichtung die räumliche Lage der Farbmarken zueinander und damit auch die dreidimensionale räumliche Lage der Anzeigevorrichtung bzw. der Trägerebene des zu übertragenden Authentifizierungscodes zu erfassen. Insbesondere kann mittels einer der Empfangsvorrichtung zugeordneten Steuereinheit die Flächennormale zur Trägerebene bestimmt werden. Dies ist besonders vorteilhaft für Anwendungen, bei denen die Empfangsvorrichtung einem fernsteuerbaren Fahrzeug oder Fluggerät (wie z.B. einer Drohne) zugeordnet ist. Durch Bestimmen der Flächennormale der Trägerebene des Authentifizierungscodes können Antriebs-Steuergrößen ermittelt werden, welche zum Beispiel das Fahrzeug bzw. Fluggerät in eine Position bringen, bei der die optische Achse der Empfangsvorrichtung mit der Flächennormale der Trägerebene korrespondiert, oder durch Auswertung des Rotationswinkels die Entfernung angepasst wird. Der wesentliche Vorteil im Zusammenhang mit dieser Erfindung besteht darin, dass Eingaben von einem Anwender, der mit einem erfindungsgemäßen Anzeigevorrichtung Steuerungsgesten ausführt, welche die räumliche Lage der Farbmarken in Bezug auf den Empfänger verändern, mittels Authentifizierung abgesichert werden können.

Dabei werden zunächst die von der Empfangsvorrichtung empfangenen Bilddaten fortlaufend auf das Vorliegen von Farbmarken ausgewertet. Erkannte Farbmarken werden anhand der ermittelten Farbe und der anwendungsspezifisch definierten Proportionen zu Farbmarkengruppen gruppiert, wobei jede Farbmarkengruppe einem n-Tupel von vordefinierten Farben entspricht. Gemäß der Erfindung sind also die Farbmarken eines jeden Codes mit jeweils einer unterschiedlichen Schlüsselfarbe markiert. Auf diese Weise ist eine wirksame Vorselektion der empfangenen Kamerabild-Daten möglich und es können zusätzliche Informationen über die logische und geometrische Zugehörigkeit sensorisch erkannter Farbmarken zu einzelnen Codes generiert werden. So müssen beispielsweise als gleichfarbig erkannte Farbmarken zu unterschiedlichen Codes gehören, während als verschiedenfarbig erkannte Farbmarken Bestandteile desselben Codes sein können, sofern ihre Abstände zueinander in Abhängigkeit zu ihren Proportionen ein definiertes Maß nicht überschreiten. Im nächsten Teilschritt werden die zweidimensionalen Koordinaten aller zu einer gemeinsamen Farbmarkengruppe gehörigen Farbmarken ermittelt, wobei ein der Empfangsvorrichtung zugeordnetes Koordinatensystem als Bezugssystem dient, und in einem weiteren Teilschritt in ein dem Fahrzeug bzw. der Empfangsvorrichtung zugeordnetes dreidimensionales Koordinatensystem transformiert. Hierzu wird die dreidimensionale Geometrie der durch die Farbmarkengruppe aufgespannten Ebene durch eine an sich bekannte Zentralprojektion aus den bekannten Positionen, Abmessungen und Orientierungen der Farbmarken im unverzerrten Code rekonstruiert und deren Ebenen-Gleichungen ermittelt. Aus dem Kreuzprodukt zweier diese Ebene aufspannender Vektoren wird in einem letzten Teilschritt zunächst der Normalenvektor und schließlich zusammen mit dem Flächenschwerpunkt die Flächennormale dieser Ebene ermittelt. Auf diese Weise ermöglicht das erfindungsgemäße Verfahren eine Ermittlung der dreidimensionalen Koordinaten sowie der Normale dieser Ebene. Bei einem in vorteilhafter Weise standardisierten Code sind die verschiedenen Farbmarken des Codes derart positioniert, dass die Flächennormale der von einer Farbmarkengruppe aufgespannten Ebene mit der Flächennormale der Trägerebene des Codes übereinstimmt. Sodann werden die Steuergrößen zur Ansteuerung der Maschine derart an die Maschine ausgegeben, dass diese bzw. die auf dieser Fahrzeug montierte Empfangsvorrichtung in eine Position geführt wird, die innerhalb eines kegelförmigen Raumbereiches liegt, wobei die Achse des Kegels durch die Flächennormale der Trägerebene definiert ist. Der Öffnungswinkel und die Höhe des Kegels sind hingegen durch die optischen Parameter der Empfangsvorrichtung bestimmt; d.h. sie entsprechen den Werten, innerhalb denen das Auflösungsvermögen der Empfangsvorrichtung hinsichtlich Winkelabweichung und Entfernung zur Erkennung des Codes ausreicht.

Ein solches erfindungsgemäßes Verfahren wird wirkungsvoll dadurch unterstützt, dass die räumliche Anordnung der dem Trägersignal zugeordneten Farbmarke in Bezug auf die mindestens eine weitere Farbmarke festgelegt und unveränderlich ist. Dies erleichtert die Auswertung der Farbmarken. Da die räumliche Beziehung der Farbmarken zueinander bekannt ist, und Farbmarken somit nicht erst "gesucht" werden müssen, wird auf diese Weise auch der Farbton "schwarz" als Farbzustand verwendbar.

Es ist von besonderem Vorteil, wenn das erfindungsgemäße Verfahren innerhalb eines Augmented Reality-Modells zum Visualisieren von mittels der Raumkoordinate in einem virtuellen Raum identifizierbaren Objekten eingesetzt wird. So kann beispielsweise eine "Maschine" im Sinne der Erfindung als ein "Augmented Reality System" ausgeführt sein, dessen Bestandteile in Abhängigkeit von der mit dem erfindungsgemäßen Verfahren erzeugten Raumkoordinate ansprechbar bzw. aktivierbar sind und in Folge dieser Aktivierung auf einem Monitor dargestellt werden. Auf diese Weise ist ein Visualisierungssystem realisierbar, bei dem in der Realität nicht sichtbare Bauteile (z.B. weil durch andere Bauteile verdeckt) mittels eines Vektorpfeils virtuell angesteuert und zur Sichtbarmachung aktiviert werden können. Mit Hilfe der erfindungsgemäßen Vektorlängensteuerung (gemäß des zweiten Verfahrensschrittes) können verschiedene übereinander liegende (bzw. hintereinander angeordnete) Sichtebenen (de)aktiviert bzw. reguliert werden. So könnten beispielsweise die Raumkoordinaten bzw. der Vektor einem Bediener mittels eines dreidimensionalen "Augmented Reality Systems" (bekannte Ausführungen hierfür umfassen sog. "Datenbrillen", aber auch Applikationen für Mobilgeräte wie z.B. Smartphones oder Tablet-PCs) in die realen Welt eingeblendet werden. Es wäre auf diese Weise eine Art "virtueller Röntgenblick" realisierbar, d.h. im Augmented Reality System sind Objekte einblendbar und mittels des erfindungsgemäßen Verfahrens ansteuerbar, welche in der Realität nicht unmittelbar sichtbar sind (weil z.B. durch ein anderes, in Blickrichtung davor liegendes Objekt verdeckt). Mittels der erfindungsgemäßen Ansteuerungsverfahrens sind über die Beeinflussung der Vektorlänge die verschiedenen Sichtebenen ansteuerbar bzw. regulierbar.

Ein zur Durchführung des erfindungsgemäßen Verfahrens geeignetes Ansteuerungssystem einer Maschine ist dadurch gekennzeichnet, dass das Ansteuerungssystem mittels eines optischen Bildverarbeitungssystems zur Ermittlung der räumlichen Lage eines senkrecht auf dem Flächenschwerpunkt eines auf einer Trägerebene aufgebrachten und mittels des optischen Bildverarbeitungssystems lesbaren zweidimensionalen Codes stehenden Normalenvektors, zur Erfassung des Drehwinkels einer Rotationsbewegung der Trägerebene des Codes um eine zur Trägerebene senkrechten Drehachse sowie zur Bestimmung der Länge des Normalenvektors mittels des Drehwinkels eingerichtet ist. Gemäß einer sinnvollen Weiterentwicklung ist das Ansteuerungssystem ferner zur Bestimmung der Richtung des Normalenvektors eingerichtet.

Die vorliegende Erfindung wird nachfolgend anhand eines Ausführungsbeispiels und dazugehöriger Zeichnungen näher erläutert. Es zeigen:
Figur 1: schematische Darstellung des erfindungsgemäßen Ansteuerungsverfahrens
Figur 2: alternativer Aufbau zur Durchführung des erfindungsgemäßen Ansteuerungsverfahrens
Figur 3: schematischer Aufbau eines als Anzeigevorrichtung für einen dynamischen Code eingerichteten Smartphone-Displays
Figur 4: schematische Darstellung einer kodierten Signalfolge k1 bis k8

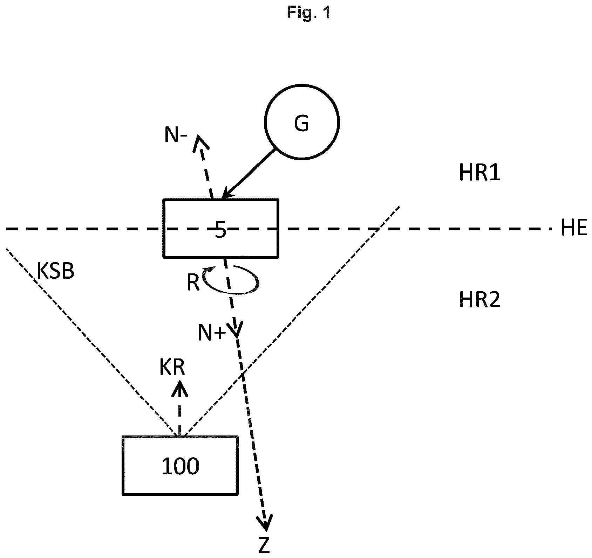

Figur 1 zeigt eine schematische Darstellung des erfindungsgemäßen Ansteuerungsverfahrens. Ein Gestengeber (G) verfügt über eine Musterkarte (5), welche einseitig mit einem maschinenlesbaren zweidimensionalen Code bedruckt ist.

Alternativ hierzu kann auch vorgesehen sein, dass die Musterkarte beidseitig mit jeweils einem maschinenlesbaren zweidimensionalen Code bedruckt ist, wobei sich die Inhalte beider Codes in mindestens einem Informationselement voneinander unterscheiden. Die Musterkarte (5) (bzw. konkreter: die den Code tragende Oberfläche der Musterkarte) definiert eine Trägerebene (HE). Alternativ zu einer Musterkarte kann auch ein Display eines Smartphones oder Tablet-PCs vorgesehen sein. Die Maschine weist ein optisches Bildverarbeitungssystem mit einer Kamera (100) auf. Diese Kamera (100) verfügt in an sich bekannter Weise über einen Sichtbereich (KSB), der im Wesentlichen durch die Blickrichtung bzw. optische Achse (KR) der Kamera bestimmt ist. In einer neutralen Grundstellung ist die Trägerebene (HE) im Wesentlichen in einem rechten Winkel zur Kameraachse (KR) ausgerichtet.

Der Gestengeber (G) definiert sodann mittels der Musterkarte (5) einen virtuellen Vektor, welcher ausgehend vom Flächenschwerpunkt des auf der Kamera-zugewandten Oberfläche der Musterkarte aufgebrachten Codes hin zu einer Raumkoordinate (Z) zeigt. Hierzu wird in einem ersten Verfahrensschritt die Musterkarte (5) so im Raum gekippt, dass der Normalenvektor (N+) in Richtung auf die Ziel-Raumkoordinate (Z) orientiert ist. Die Raumkoordinate kann ein beliebiger Punkt innerhalb des der Kamera zugewandten ersten Halbraums (HR1) sowie innerhalb des Sichtbereichs der Kamera (KSB) sein. Zur Ansteuerung von Punkten im der Kamera abgewandten zweiten Halbraum (HR2) ist die Richtung des Normalenvektors umschaltbar (N+). Diese Umschaltung erfolgt durch eine Rotationsbewegung in entgegengesetzter Richtung (bei einem einseitig auf dem Trägermedium aufgebrachten Code) oder alternativ (bei zweiseitig auf dem Trägermediums aufgebrachten Codes) durch Wenden des Trägermediums und anschließendes Entschlüsseln des codierten Inhalts.

In einem zweiten Verfahrensschritt wird die Länge des Vektors mittels einer Rotationsbewegung (R) auf die zum Erreichen der Ziel-Raumkoordinate (Z) erforderliche Länge eingestellt. Zur Verbesserung der Gebrauchstauglichkeit wird ein Drehwinkel-Bereich von [+30°] bis [-30°] nicht in Ansteuerungsinformationen übertragen (d.h. bei Rotationsbewegungen innerhalb dieses Winkelbereichs erfolgt keine Längenänderung des Vektors). Bei Drehwinkeln, deren Betrag größer als 30° ist, erfolgt eine stufenlose Verkürzung oder Verlängerung der Vektorlänge, wobei die Änderungsgeschwindigkeit mit steigendem Drehwinkel überproportional ansteigend ausgeführt ist.

Sobald auf diese Weise die Ziel-Raumkoordinate (Z) ermittelt ist, kann durch Weiterleiten der auf dieser Raumkoordinate basierenden Ansteuergrößen an eine Weiterverarbeitungseinrichtung der anzusteuernden Maschine ein hierauf basierender Vorgang, wie z.B. Fahrbewegung der Maschine in Richtung auf die Ziel-Raumkoordinate (Z) oder die Identifikation eines mit dieser Raumkoordinate in Bezug stehenden Bauteils durch die Maschine, gestartet werden.

Ferner synchronisiert die Weiterverarbeitungseinrichtung der Maschine den Visualisierungsvorgang mit einer Datenbrille, wobei sowohl die Ziel-Raumkoordinate (Z) als auch der Vektor und das identifizierte Bauteil im Sichtbereich der Datenbrille eingeblendet werden.

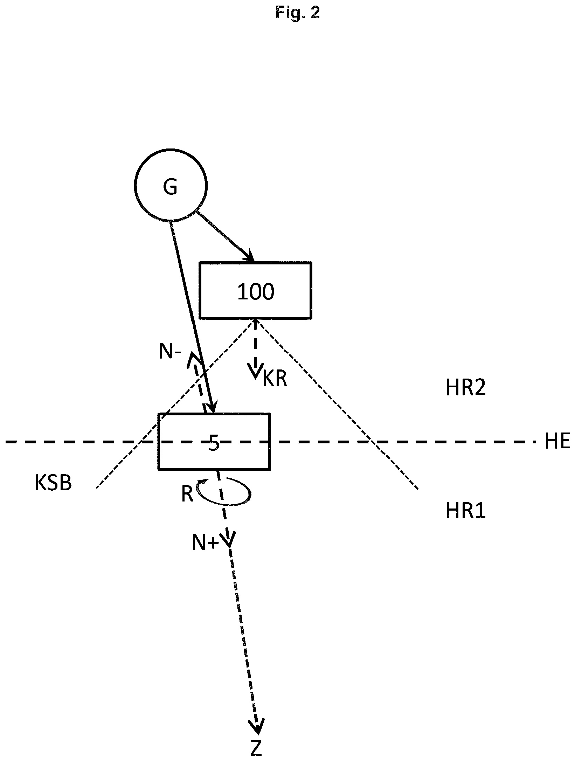

In Figur 2 ist ein alternativer Aufbau zur Ausführung des erfindungsgemäßen Verfahrens angegeben, bei dem die Blickrichtung der Kamera (100) vom Gestengeber (G) wegzeigend ausgerichtet ist. Dies könnte beispielsweise der Fall sein, wenn der Gestengeber mit einer ersten Hand die (z.B. in ein Smartphone integrierte) Kamera und mit einer zweiten Hand das Trägermedium (5) des Codes hält und die Kamera auf den Code richtet. Der grundsätzliche Ablauf des erfindungsgemäßen Verfahrens verändert sich hierdurch jedoch nicht.

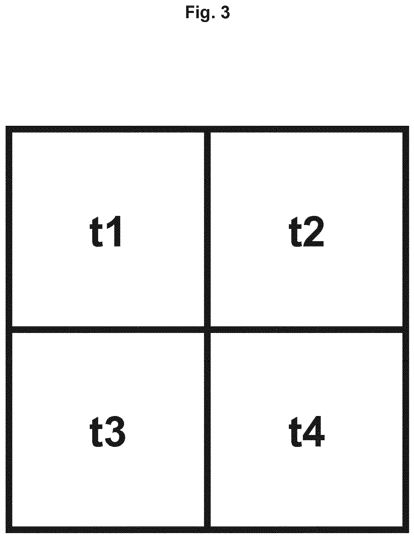

In besonders vorteilhafter Weise ist das erfindungsgemäße Verfahren nicht nur in Verbindung mit statischen Codes anwendbar, sondern auch in Verbindung mit dynamischen zweidimensionalen Codes. In Figur 3 ist der schematische Aufbau einer Anzeigevorrichtung dargestellt, welche Bestandteil eines Systems zur Authentifizierung eines Nutzers gegenüber einer zentralen Instanz zur Freigabe von Nutzer-individuellen Berechtigungen ist. Zusätzlich zur erfindungsgemäßen Ermittlung der Ansteuerungsgrößen erfolgt auch gleichzeitig eine Berechtigungsprüfung des Nutzers. Dar Trägermedium für den Code ist durch das Display eines herkömmlichen Smartphones gebildet, welches - nach Aktivierung einer entsprechenden auf dem Smartphone gespeicherten Software-Applikation - den Anzeigebereich in etwa vier gleich große rechteckige Segmente unterteilt, welche zueinander paarweise horizontal und vertikal angeordnet sind. Jedes dieser Segmente bildet eine Farbmarke (t1, t2, t3, t4) aus. Jede dieser Farbmarke (t1, t2, t3, t4) ist zur Anzeige zweier für die jeweilige Farbmarke individueller Farbzustände eingerichtet. Eine erste Farbmarke (t1) ist zum wechselweisen Anzeigen der Farbzustände grau und schwarz eingerichtet; die übrigen Farbmarken wie folgt:
zweite Farbmarke (t2) zwischen grün und gelb;
dritte Farbmarke (t3) zwischen orange und rot;
vierte Farbmarke (t4) zwischen lila und türkis.

Für die Farbmarken (t2, t3, t4) der Datenwerte ist vorteilhafterweise die Verwendung von gesättigten Farben (Farbwinkeln) vorgesehen. Die Farbtöne sind so gewählt, dass die Farbzustände der Farbmarken annähernd gleich hell dargestellt werden, um Blendeffekte in der Empfangsvorrichtung zu vermeiden.

Somit zeigen alle Farbmarken (t1, t2, t3, t4) dieser zweidimensionalen Anordnung zu jedem beliebigen Zeitpunkt, d.h. unabhängig von ihrem aktuellen Anzeige-Zustand, einen der jeweiligen Farbmarke eindeutig zuordenbaren Farbzustand. Die letzten drei Farbmarken (t2, t3, t4) sind in einer aus dem Stand der Technik bekannten Weise dazu eingerichtet, mittels Farbwechseln optisch codierte Informationen darzustellen. Die erfinderische Idee verkörpert sich in der zusätzlichen ersten Farbmarke (t1), deren Farbzustände in einer vorgebbaren Frequenz wechseln (im Kontext dieser Erfindung als "Trägerfrequenz" bezeichnet), wobei diese Trägerfrequenz mit der Farbwechsel-Frequenz der übrigen Farbmarken (t2, t3, t4) übereinstimmen muss. Mittels einer (in diesem Ausführungsbeispiel aus Gründen der Übersichtlichkeit nicht dargestellten) herkömmlichen Kamera wird seitens der zentralen Freigabe-Instanz das auf diese Weise vom Display ausgestrahlte Bild empfangen und - zusätzlich zur Ermittlung der Ansteuerungsgrößen - bezüglich der darin durch Farbwechsel codierten Authentifizierungs-Informationen ausgewertet.

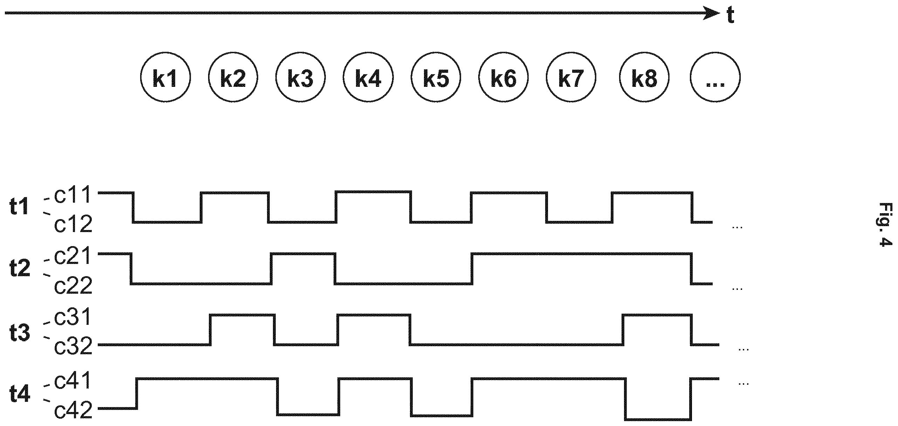

In Figur 4 sind die im zeitlichen Verlauf der Zustände k1, k2 ... k8 auf den Farbmarken (t1, t2, t3, t4) jeweils angezeigten Farbzustände (c11, ... c42) dargestellt. Jede Farbmarke tᵢ wechselt dabei nach einem durch den Inhalt der codierten Authentifizierungsdaten bestimmten Muster zwischen seinen beiden charakteristischen Farbzuständen cᵢ1 und cᵢ2, mit Ausnahme der Farbmarke t1, welche mit einer festen Trägerfrequenz zwischen ihren beiden Farbzuständen c11 und c12 wechselt. Allerdings erfolgt der Farbwechsel einer jeden Farbmarke zwischen einem ersten Zustand kᵢ und einem zeitlich hierauf folgenden zweiten Zustand kᵢ₊₁ nicht in absoluter Synchronität mit den jeweiligen Zustandswechseln der übrigen auf dem Display angezeigten Farbmarken. Ursachen hierfür können der Einsatz komplexer Soft- und Hardware-Komponenten sein, wie z.B. eine Graphikbibliothek oder die Anzeigetechnologie des Displays. Dies bedeutet, dass eine Bilddarstellung genau während der Zustandsänderung vom ersten Zustand kᵢ zum zweiten Zustand kᵢ₊₁ aufgebaut werden könnte und dann im Ergebnis zum Teil den alten Zustand kᵢ, zum Teil aber auch den neuen Zustand kᵢ₊₁ darstellen könnte. Dies wird auch dadurch begünstigt, dass die jeweiligen Änderungen zwischen den beiden Farbzuständen cᵢ1 und cᵢ2 nicht in einer absolut übergangslosen Weise, d.h. also nicht unmittelbar oder "schlagartig" erfolgen, sondern eine gewisse Zeitspanne benötigen. Die Schaltflanken zwischen beiden Farbzuständen sind in der Realität somit nicht vertikal, sondern die Schaltverläufe gestalten sich - bei hinreichend exakter Betrachtung - eher schräg und stetig.

Sobald auf der Empfängerseite eine Zustandsänderung für die dem Trägersignal zugeordnete Farbmarke (t1) erkannt wird, muss auch für die weiteren Farbmarken (t2, t3, t4) jeweils eine Zustandsänderung in Form eines vom vorherigen Zustand kᵢ abweichenden Farbzustands detektiert werden. Andernfalls liegt ein fehlerbehaftetes Bild vor. Auf Empfängerseite werden alle Bilder verworfen, bei denen nicht mindestens zwei aufeinanderfolgende Bildaufnahmen den gleichen Zustand darstellen. Ansonsten erkennt die Empfangsvorrichtung auf das Vorliegen eines fehlerbehafteten Zwischenbildes und verwirft dieses.

### Bezugszeichenliste

- G: Gestengeber
- 5: Musterkarte
- HE: Trägerebene
- HR1: erster Halbraum
- HR2: zweiter Halbraum
- 100: Kamera
- KR: optische Achse der Kamera
- KSB: Sichtbereich der Kamera
- N-: in den ersten Halbraum (HR1) gerichteter Normalenvektor
- N+: in den zweiten Halbraum (HR2) gerichteter Normalenvektor
- R: Rotationsbewegung
- Z: (Ziel-)Raumkoordinate
- t1, t2, t3, t4: Farbmarke
- cᵢ1: erster Farbzustand der Farbmarke tᵢ
- cᵢ2: zweiter Farbzustand der Farbmarke tᵢ
- t: Verlauf des Zeitstrahls

## Patentansprüche

1. Verfahren zur Erzeugung mindestens einer Raumkoordinate als Ansteuergröße zur Ansteuerung einer Maschine mittels eines auf einer Trägerebene eines Trägermediums aufgebrachten zweidimensionalen Codes, welche zur Ansteuerung eines durch die Raumkoordinate beschriebenen Zielpunkts eingerichtet ist,
wobei der auf einer Trägerebene (HE) eines Trägermediums aufgebrachte zweidimensionale Code in einem ersten Verfahrensschritt mittels eines optischen Bildverarbeitungssystems gelesen wird,
**dadurch gekennzeichnet, dass** das Verfahren weiters folgende Verfahrensschritte aufweist:
Ermitteln der räumlichen Lage eines senkrecht auf dem Flächenschwerpunkt des Codes stehenden Normalenvektors (N+) mittels des Bildverarbeitungssystems,
Erfassen des Drehwinkels einer Rotationsbewegung (R) der Trägerebene (HE) des Codes um eine zur Trägerebene (HE) senkrechte Drehachse mittels des Bildverarbeitungssystems,
Bestimmen der Länge des Normalenvektors (N+) basierend auf dem Drehwinkel,
Ermitteln einer vektoriellen Raumkoordinate (Z) aus der räumlichen Lage des Normalenvektors (N+) und der Länge des Normalenvektors (N+) sowie Übermitteln der vektoriellen Raumkoordinate (Z) als Ansteuergröße an ein Ansteuerungssystem der Maschine.

2. Verfahren zur Erzeugung mindestens einer Raumkoordinate als Ansteuergröße zur Ansteuerung einer Maschine nach Patentanspruch 1, **dadurch gekennzeichnet, dass** beim Erfassen des Drehwinkels mittels des Bildverarbeitungssystems zusätzlich die Drehrichtung der Rotationsbewegung (R) der Trägerebene (HE) des Codes erfasst und hieraus die Orientierungsrichtung des Normalenvektors (N+) in Bezug auf die Trägerebene (HE) ermittelt wird.

3. Verfahren zur Erzeugung mindestens einer Raumkoordinate als Ansteuergröße zur Ansteuerung einer Maschine nach Patentanspruch 1, **dadurch gekennzeichnet, dass** in einem weiteren Verfahrensschritt mittels des Bildverarbeitungssystems eine Rotation der Trägerebene (HE) des Codes um eine zur Trägerebene parallele Drehachse erfasst und als Eingangssignal für eine Invertierung der Orientierungsrichtung des Normalenvektors (N+) in Bezug auf die Trägerebene (HE) herangezogen wird.

4. Verfahren zur Erzeugung mindestens einer Raumkoordinate als Ansteuergröße zur Ansteuerung einer Maschine nach Patentanspruch 1, **dadurch gekennzeichnet, dass** in einem weiteren Verfahrensschritt die Orientierungsrichtung des Normalenvektors (N+) in Bezug auf die Trägerebene (HE) durch Auslesen und Entschlüsseln des Codes ermittelt wird.

5. Verfahren zur Erzeugung mindestens einer Raumkoordinate als Ansteuergröße zur Ansteuerung einer Maschine nach einem der Patentansprüche 1 bis 4, **dadurch gekennzeichnet, dass** das Ermitteln der räumlichen Lage des Normalenvektors folgende Verfahrensschritte aufweist:
▪ Empfang von Bilddaten von mindestens einer Kamera (100) des optischen Bildverarbeitungssystems,
▪ Auswerten der Bilddaten auf das Vorhandensein von Farbmarken,
▪ Gruppierung von erkannten Farbmarken zu Farbmarkengruppen,
▪ Ermittlung der zweidimensionalen Koordinaten aller zu einer Farbmarkengruppe zugehörigen Farbmarken in einem der Kamera (100) zugeordneten Koordinatensystem,
▪ Transformation der zweidimensionalen Koordinaten aller Farbmarken einer Farbmarkengruppe in ein der Maschine zugeordnetes dreidimensionales Koordinatensystem,
▪ Ermittlung des Normalenvektors durch den Schwerpunkt der von den Farbmarken einer Farbmarkengruppe aufgespannten Fläche.

6. Verfahren zur Erzeugung mindestens einer Raumkoordinate als Ansteuergröße zur Ansteuerung einer Maschine nach Patentanspruch 5, **dadurch gekennzeichnet, dass** zur Auswertung der Bilddaten mindestens eine Bitmaske erstellt wird, welche auf in den Farbmarken enthaltene Schlüsselfarben abgestimmt ist.

7. Verfahren zur Erzeugung mindestens einer Raumkoordinate als Ansteuergröße zur Ansteuerung einer Maschine nach einem der Patentansprüche 5 oder 6, **dadurch gekennzeichnet, dass** die oder jede Farbmarke lichtemittierend ausgeführt ist.

8. Verfahren zur Erzeugung mindestens einer Raumkoordinate als Ansteuergröße zur Ansteuerung einer Maschine nach einem der Patentansprüche 1 bis 7, **dadurch gekennzeichnet, dass** das Verfahren innerhalb eines Augmented Reality-Modells zum Visualisieren von mittels der Raumkoordinate in einem virtuellen Raum identifizierbaren Objekten eingesetzt wird.

## Claims

1. Method for generating at least one spatial coordinate as a control variable for controlling a machine by means of a two-dimensional code applied to a carrier plane of a carrier medium, which is set up for controlling a target point described by the spatial coordinate,
wherein the two-dimensional code applied to a carrier plane (HE) of a carrier medium is read in a first method step by means of an optical image processing system,
**characterised in that** the method further comprises the following method steps:
determining the spatial position of a normal vector (N+) perpendicular to the centroid of the area of the code by means of the image processing system,
detecting the angle of rotation of a rotational movement (R) of the carrier plane (HE) of the code about an axis of rotation perpendicular to the carrier plane (HE) by means of the image processing system,
determining the length of the normal vector (N+) based on the angle of rotation,
determining a vectorial spatial coordinate (Z) from the spatial positon of the normal vector (N+) and the length of the normal vector (N+) and transmitting the vectorial spatial coordinate (Z) as a control variable to a control system of the machine.

2. Method for generating at least one spatial coordinate as a control variable for controlling a machine according to claim 1, **characterised in that** when the angle of rotation is detected by means of the image processing system, the direction of rotation of the rotational movement (R) of the carrier plane (HE) of the code is additionally detected and from this the direction of orientation of the normal vector (N+) is determined with respect to the carrier plane (HE).

3. Method for generating at least one spatial coordinate as a control variable for controlling a machine according to claim 1, **characterised in that** in a further method step a rotation of the carrier plane (HE) of the code about an axis of rotation parallel to the carrier plane is detected by means of the image processing system and is used as an input signal for an inversion of the direction of orientation of the normal vector (N+) with respect to the carrier plane (HE).

4. Method for generating at least one spatial coordinate as a control variable for controlling a machine according to claim 1, **characterised in that** in a further method step the direction of orientation of the normal vector (N+) with respect to the carrier plane (HE) is determined by reading and decoding the code.

5. Method for generating at least one spatial coordinate as a control variable for controlling a machine according to any of claims 1 to 4, **characterised in that** determining the spatial position of the normal vector comprises the following method steps:
- receiving image data from at least one camera (100) of the optical image processing system,
- evaluating the image data for the presence of colour marks,
- grouping detected colour marks into colour mark groups,
- determining the two-dimensional coordinates of all colour marks belonging to a colour mark group in a coordinate system assigned to the camera (100),
- transforming the two-dimensional coordinates of all colour marks of a colour mark group into a three-dimensional coordinate system assigned to the machine,
- determining the normal vector by the focal point of the area spanned by the colour marks of a colour mark group.

6. Method for generating at least one spatial coordinate as a control variable for controlling a machine according to claim 5, **characterised in that** for evaluating the image data at least one bitmask is created which is matched to key colours contained in the colour marks.

7. Method for generating at least one spatial coordinate as a control variable for controlling a machine according to any of claims 5 or 6, **characterised in that** the or each colour mark is light-emitting.

8. Method for generating at least one spatial coordinate as a control variable for controlling a machine according to any of claims 1 to 7, **characterised in that** the method is used within an augmented reality model for visualising objects identifiable in a virtual space by means of the spatial coordinate.

## Revendications

1. Procédé de génération d'au moins une coordonnée spatiale en tant que variable de commande permettant de commander une machine au moyen d'un code bidimensionnel appliqué à un plan de support d'un milieu de support et conçu pour commander un point cible décrit par la coordonnée spatiale,
dans lequel le code bidimensionnel appliqué à un plan de support (HE) d'un milieu de support est lu dans une première étape de procédé au moyen d'un système de traitement d'image optique,
**caractérisé en ce que** le procédé comprend en outre les étapes ci-dessous consistant à :
déterminer la position spatiale d'un vecteur normal (N+) perpendiculaire au centre de gravité du code au moyen du système de traitement d'image,
détecter l'angle de rotation d'un mouvement de rotation (R) du plan de support (HE) du code autour d'un axe de rotation perpendiculaire au plan de support (HE) au moyen du système de traitement d'image,
déterminer la longueur du vecteur normal (N+) en se basant sur l'angle de rotation,
déterminer une coordonnée spatiale vectorielle (Z) à partir de la position spatiale du vecteur normal (N+) et de la longueur du vecteur normal (N+) et
transmettre la coordonnée spatiale vectorielle (Z) en tant que variable de commande à un système de commande de la machine.

2. Procédé de génération d'au moins une coordonnée spatiale en tant que variable de commande permettant de commander une machine selon la revendication 1, **caractérisé en ce que**, lorsque l'angle de rotation est détecté au moyen du système de traitement d'image, le sens de rotation du mouvement de rotation (R) du plan de support (HE) du code est en outre détecté et par suite la direction d'orientation du vecteur normal (N+) par rapport au plan de support (HE) est déterminée.

3. Procédé de génération d'au moins une coordonnée spatiale en tant que variable de commande permettant de commander une machine selon la revendication 1, **caractérisé en ce que**, dans une autre étape de procédé, une rotation du plan de support (HE) du code autour d'un axe de rotation parallèle au plan de support est détectée au moyen du système de traitement d'image et est utilisée en tant que signal d'entrée pour une inversion de la direction d'orientation du vecteur normal (N+) par rapport au plan de support (HE).

4. Procédé de génération d'au moins une coordonnée spatiale en tant que variable de commande permettant de commander une machine selon la revendication 1, **caractérisé en ce que**, dans une autre étape de procédé, la direction d'orientation du vecteur normal (N+) par rapport au plan de support (HE) est déterminée par lecture et décryptage du code.

5. Procédé de génération d'au moins une coordonnée spatiale en tant que variable de commande permettant de commander une machine selon l'une quelconque des revendications 1 à 4, **caractérisé en ce que** la détermination de la position spatiale du vecteur normal comprend les étapes de procédé ci-dessous consistant à :
▪ recevoir des données d'image provenant d'au moins une caméra (100) du système de traitement d'image optique,
▪ évaluer les données d'image afin de détecter la présence de marques de couleur,
▪ regrouper les marques de couleur reconnues en groupes de marques de couleur,
▪ déterminer les coordonnées bidimensionnelles de toutes les marques de couleur appartenant à un groupe de marques de couleur au sein d'un système de coordonnées associé à la caméra (100),
▪ transformer les coordonnées bidimensionnelles de toutes les marques de couleur d'un groupe de marques de couleur en un système de coordonnées tridimensionnelles associé à la machine,
▪ déterminer le vecteur normal passant par le centre de gravité de la surface couverte par les marques de couleur d'un groupe de marques de couleur.

6. Procédé de génération d'au moins une coordonnée spatiale en tant que variable de commande permettant de commander une machine selon la revendication 5, **caractérisé en ce qu'**au moins un masque de bits adapté aux couleurs clés contenues dans les marques de couleurs est produit afin d'évaluer les données d'image.

7. Procédé de génération d'au moins une coordonnée spatiale en tant que variable de commande permettant de commander une machine selon l'une quelconque des revendications 5 ou 6, **caractérisé en ce que** la ou chaque marque de couleur est réalisée de manière à émettre de la lumière.

8. Procédé de génération d'au moins une coordonnée spatiale en tant que variable de commande permettant de commander une machine selon l'une quelconque des revendications 1 à 7, **caractérisé en ce que** le procédé est utilisé au sein d'un modèle de réalité augmentée afin de visualiser des objets pouvant être identifiés dans un espace virtuel au moyen de la coordonnée spatiale.
